(19) Europäisches Patentamt
European Patent Office
Office européen des brevets

(11) **EP 1 304 546 A1**

(12) **EUROPEAN PATENT APPLICATION**

(43) Date of publication:
**23.04.2003 Bulletin 2003/17**

(51) Int Cl.⁷: **G01C 19/00**, G09B 23/10, F03G 3/08

(21) Application number: **01124271.6**

(22) Date of filing: **17.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **P.V. Hitech Co., Ltd.**
**Samseannai Sub-District, Phayathai District, Bangkok (TH)**

(72) Inventor: **Shipov, Gennady**
**Moscow (RU)**

(74) Representative: **Sunderland, James Harry et al**
**HASELTINE LAKE PARTNERS**
**Motorama Haus 502**
**Rosenheimer Strasse 30**
**81669 München (DE)**

(54) **Four dimensional gyroscope**

(57) The device is a four-dimensional gyroscope with self-action, that demonstrates the controlled connection between translational and rotational inertia, which makes the center of masses to move translationally as a result of the preformed " internal impact". Such impact is achieved by the sharp change of the rotational energy of the system, meanwhile the device performs the principally new type of motion - shifting the center of masses effected by the internal non-compensated inertial forces. For the proof of the principally new type of motion in classical mechanics the device is equipped with a scientific research complex, which allows to observe the motion of the center of. masses effected by the inertial forces, as well as to compare the theoretical results with the experimental data.

**FIG.1**

EP 1 304 546 A1

**Description**

## BACKGROUND OF THE INVENTION

1. Field of the Invention

Herewith is claimed the invention of the device, the center of the masses of which is moved by the non-compensated inertial forces. The device is based on the principle of the four-dimensional gyroscope, which demonstrates the violation of the momentum conservation law during the absolute elastic collision. This violation happens due to the connection between the translational and rotational inertia. The self-action four-dimensional gyroscope is based on the device creating the guided change of the rotational inertia that moves its center of masses.

2. Description of the Prior Art

All the contemporary Field theory from Newton's gravitation theory and up to Einstein's general relativity theory was developing as a theory of the translational relativity. In such theories the spac is formed by the manifold of the translational coordinates, dealing with the translational motion of masses.

For the description of the translational motions of the free falling-lifts in the gravitational field A. Einstein has introduced the locally accelerated systems of the first kind, where the local gravitational force is compensated by the inertial force. That is why in Einstein's theory the inertial forces manifest themselves as real forces according to the 3rd law of Newton's mechanics. In the contemporary classic mechanics the inertial forces are not acting according to the 3rd law of New-ton's mechanics, because it is not possible to indicate the body which they are applied to.

In order to resolve the mentioned above contradiction the author had developed the torsion theory of the inertial forces ("The Theory of Physical Vacuum" Moscow, ST-Center, 1998). According to the new theory the complete description of the inertial forces requires the extension of the general relativity theory by adding the rotational relativity. The rotational relativity has required the introduction of the 10-dimensional coordinates space, where there are 4 translational coordinates $x, y, z, x^0 = ct$ and 6 rotational coordinates $\varphi_1, \varphi_2, \varphi_3, \vartheta_1, \vartheta_2, \vartheta_3$. Besides that the angles $\varphi_1, \varphi_2, \varphi_3$ describe the space rotation of the matter and there are 3 "rotational" inertial forces connected with the changes of those coordinates, such as:

1) Centrifugal inertia force:

$$\vec{F}_1 = -m[\vec{\omega}[\vec{\omega}\vec{r}]],$$

2) Coriolis force

$$\vec{F}_2 = -2m[\vec{\omega}\vec{v}],$$

3) Inertial force, caused by the rotational irregularity

$$\vec{F}_3 = -m[\dot{\vec{\omega}}\vec{r}],$$

as well as the angles $\vartheta_1, \vartheta_2, \vartheta_3$ denote the rotation of the matter in the space- time planes $ct - x$, $ct - y$ and $ct - z$, which cause the appearance of the translational inertial force

$$\vec{F}_4 = -m\vec{W}.$$

Unlike the Einstein's theory the new theory allows to investigate the free falling lifts rotating around a certain axis, where the inertial forces are acting locally, caused by rotation. Such forces are in action even though the gravitational field is absent and herewith we can discover the new class of the accelerated reference frames - the locally accelerated inertial reference frames of the second type. Such reference frames appear when the center of masses is effected by the inertial forces, which are compensating each other. The space of the events of the reference frames of the second kind has the structure of absolute parallelism, which has got both curvature and torsion. In general such space is not homogeneous and isotropic, that is why we observe the violation of the conservation laws, which are effective in the ordinary Euclidean dimension.

The four dimensional gyroscope is a typical sample of the accelerated local inertial reference systems of the second type and there are three inertial forces affecting its center of masses

$$(M + 2m)\ddot{x} = (M + 2m)\ddot{x}_c - 2mr\varepsilon\sin\phi - 2mr\omega^2\cos\phi = 0,$$

and compensating each other. In this equation $\ddot{x}_c$ - acceleration of the center of the masses of the gyroscope is equal to zero, that means that it moves with the uniformly or is at rest relatively to inertial reference frame. Nevertheless the reference frame, connected with its center of masses is accelerated because the inertial forces are acting though compensating each other. Thus we can state that in the above adduced equation the inertial forces satisfy the 3rd law of Newton mechanics and perform as real forces, by guiding of which we can change the velocity of the center of masses without using the external forces. The four-dimensional gyroscope with self-action is the device , which demonstrates the transportation of its own center of masses after the effect of the artificially created internal forces in it.

## SUMMARY OF THE INVENTION

The invention of the four - dimensional gyroscope with self-action is claimed. The effect of self-action is achieved due to the utilization of the created and controlled inertial forces inside the device, which enables the motion of its center of the masses in spite of the absence of the action of the external forces.
In order to carry out the experimental research and to prove the correctness of this statement the four-dimensional gyroscope with self-action was constructed as well as the research center was established which allowed the following:

- To prove experimentally the fact that the friction forces are not involved into the motion of the center of masses of the device.
- To obtain the kinematical characteristics during the motion of the device as follows:

    1) coordinate $x(t)$ of masses $M$ ;
    2) coordinate $x_c(t)$ of the center of masses;
    3) the angle of rotation $\phi(t)$.

- With the help of the software to calculate:

    1) velocity $v(t)$ of masses $M$ ;
    2) velocity $v_c(t)$ of the center of masses;
    3) angular velocity $\omega(t)$;
    4) acceleration $A(t)$ of masses $M$;
    5) acceleration $A_c(t)$ of the center of masses;
    6) angular acceleration $K(t)$.

- To demonstrate the movement of the device on the pendulum;
- To demonstrate experiment Vijer, when the suspended device creates the draft and pools a cart.

## BRIEF DESCRIPTION OF THE DRAWINGS

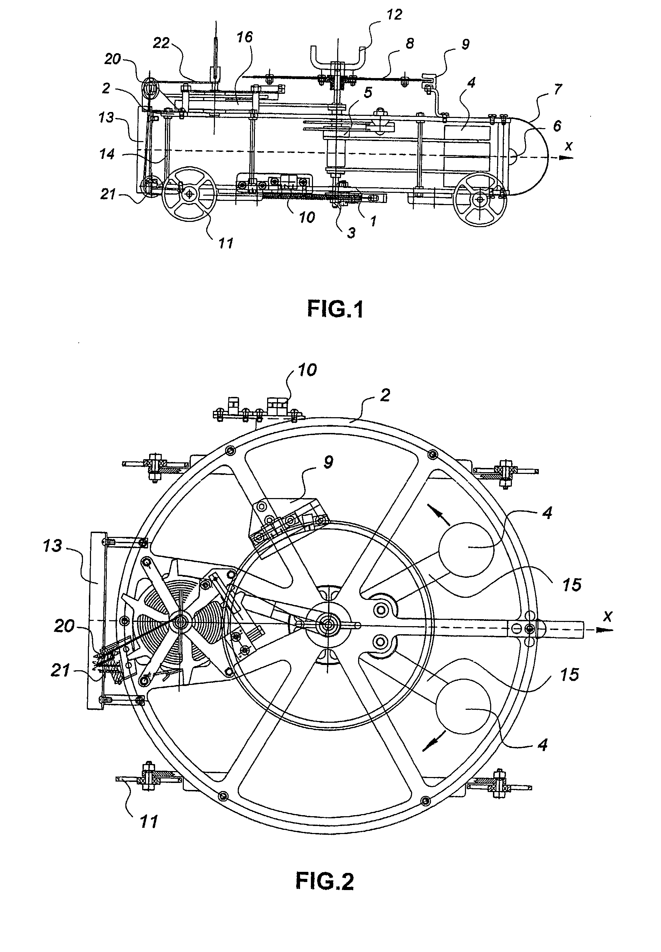

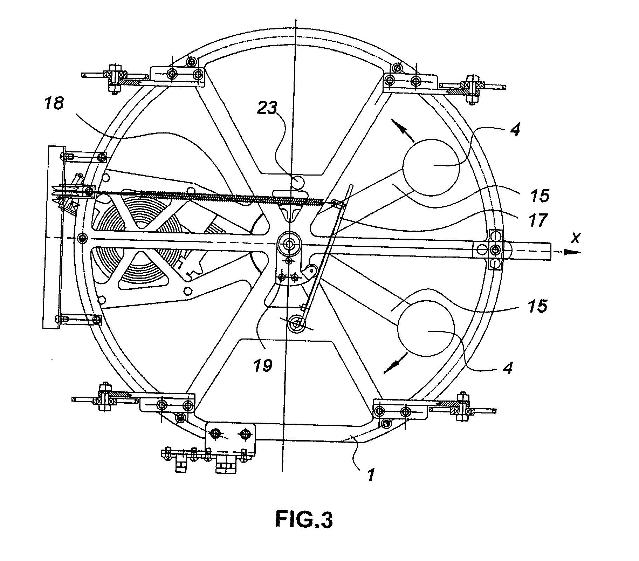

Ha FIG. 1 presents the view of the four-dimensional gyroscope, measuring blocks, motor-break, accelerating spring and supporting wheels.
Ha FIG.2 presents the top-view with small masses $m$ positioned symmetrically along the longitudinal axis of symmetry x and accelerating spring
Ha FIG.3 presents the below view with the wheels, registering equipment and the elements of the motor-break.

## DESCRIPTIONS OF THE PREFERED EMBODIMENTS

FIG.1 represents the general view of the device - the four - dimensional gyroscope with self-action The lower part 1 and the upper part 2 of its body are made from aluminum and connected with the steel studs 14. The central shaft 3 is equipped with a differential 5, which rotates synchronously small masses 4 in the different directions. The technological handle 12 starts the rotation. When the small masses arrive at the angle 300°,the small spring 18 affects the cam 19 with the help of the lath 17, thus accelerating the rotation of the small masses 4. When the angle of the rotation arrives at 330°, the accelerating spring acts, increasing the angular velocity of rotation up to the angle of 360°. Beginning from the angle of 0° and up to the angle of 150° the small masses are in the free inertial rotation (self-action is absent). When the angular momentum will be 150° the cam **19** collides with the lath **17** , that stretches the spring **18**. As a result the angular momentum of the rotation of the small masses is decreasing.

The parameters of the angular of the rotation $\phi(t)$ during the motion of the four - dimensional gyroscope with self-action are being registered with the help of the polar ruler 8 and the photo-elements 9. The photo-elements 10 are synchronously registering the parameters of coordinates $x(t)$. The data are sent from the photo-elements to the computer for the further investigation. The specially developed software allows to monitor the basic kinematical parameters of the device during its motion in real time.

**Claims**

1.   The four - dimensional gyroscope with self-action demonstrating the movement of the center of the masses activated by the artificially created non-compensated inertial forces inside it, consists of the following::

a Lower part 1 and the upper part 2 of the body with the photo-elements **3, 5, 6,-22,** forming mass *M* together with the body of the device;
b Small masses 4 synchronously rotating in the different directions and creating the rotational inertia;
c During the rotation of the small masses 4 the body of the device together with the small masses 4 - mass M - moves translationally along the axis *x*, creating the translational inertia;
d The axis of the rotation **3** of the small masses **4** is fixed on the body, which is moving translationally establishing the connection between the translational and rotational inertia;
e The accelerating spring 16 and motor-break 17-19, providing the self-action of the device with the movement of the center of the masses.

2.   The device of claim **1** in which said that with the motion of the parts of the device the rotational inertia is transformed into the translational and vice versa.

3.   The device of claim **2** in which said that with the absence of the external action both the rotational and translational vectors of the device are changed so that the center of the masses of the whole system moves with a certain velocity.

4.   The device of claim **3** in which said that the self- action of the device is provided by the violation of the balance of the inertial forces inside it when the non-compensated inertial forces directed along the axis x appear and the center of the masses is changing its velocity.

5.   The device of claim **4** in which said that as soon as the self-action along axis x finishes, the redistribution of the of the rotational and the translational inertia are taking place inside the device until they balance each other and then the center of the masses begins to move with the new constant velocity.

6.   The device of claim **5** in which said that both the self-action and new velocity depend not only from the value of the internal impact but also from the angle of the disposition of the small masses towards the axis x, as well as from the starting value of the angular velocity of the rotation of the small masses

7.   The device of claim **6** in which said:

a. It demonstrates the motion of the center of the masses affected by the inertial forces.
b. The external forces - the friction forces, aerodynamic forces, etc.- are the obstacles for the motion of the device and are not the source of the motion of the center of the masses;
c. The four - dimensional gyroscope with self-action may serve as a base for the creation of the engine of the principally new type aimed at the universal application.

FIG.1

FIG.2

EP 1 304 546 A1

FIG.3

6

European Patent Office

**PARTIAL EUROPEAN SEARCH REPORT**

which under Rule 45 of the European Patent Convention shall be considered, for the purposes of subsequent proceedings, as the European search report

Application Number

EP 01 12 4271

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 770 555 A (ANDREW REID) 20 March 1957 (1957-03-20) * the whole document * | | G01C19/00 G09B23/10 F03G3/08 |

**TECHNICAL FIELDS SEARCHED (Int.Cl.7)**

G01C
G09B
F03G

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 5 April 2002 | Hoekstra, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C07)

**European Patent Office**

**INCOMPLETE SEARCH
SHEET C**

Application Number

EP 01 12 4271

Claim(s) searched incompletely:
        1-8

Reason for the limitation of the search:

The application is concerned with a device for demonstrating the violation of some of the laws of classical mechanics. However, the description and claims are unclear to such an extent that it is not possible to carry out a meaningful search into the state of the art, as neither the theory behind the device nor its manner of working are explained. It is further not clear what kind of action of the device would prove the alleged violation. The claim to the possibility that the device may serve as a base for the creation of an engine of a principally new type is speculative and unsupported.
Therefore, the search has been limited to background art only concerning bodies moved by inertial force.

**ANNEX TO THE EUROPEAN SEARCH REPORT
ON EUROPEAN PATENT APPLICATION NO.**

EP 01 12 4271

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2002

| Patent document cited in search report | Publication date | Patent family member(s) | Publication date |
|---|---|---|---|
| GB 770555 A | 20-03-1957 | NONE | |

For more details about this annex : see Official Journal of the European Patent Office, No. 12/82